# EUROPEAN PATENT SPECIFICATION

(11) **EP 1 632 661 B1**
(45) Date of publication and mention of the grant of the patent: **30.12.2009**
(21) Application number: 05106229.7
(22) Date of filing: 10.12.2003
(51) Int. Cl.: F02B 43/10, G01K 13/02

(54) **Method for sensing and responding to a backfire in the intake system of a hydrogen fuelled internal combustion engine**
Verfahren zur Detektion und zum Reagieren auf Rückzündung im Ansaugsystem eines wasserstoffangetriebenen Verbrennungsmotors
Procèdè pour determiner et répondre au retour de flamme dans le système d'admission d'un moteur à combustion interne à hydrogène

(30) Priority: 04.01.2003 US 437906 P; 26.06.2003 US 482641 P; 27.06.2003 US 482735 P; 11.08.2003 US 493525 P
(43) Date of publication of application: 08.03.2006
(62) Divisional of application: 03777057.5
(73) Proprietor: Ford Global Technologies, LLC, Dearborn, MI 48126 (US)
(72) Inventor: Grabowski, Tony Gary, Sterling Heights MI 48188 (US); Jaura, Arun, Canton MI 48188 (US); Ortmann, Walt, Saline MI 48176 (US); Natkin, Robert, Canton MI 48187 (US); Szwabowski, Steven, Northville MI 48167 (US); Oltmans, Bret, Farmington Hills MI 48336 (US); Jih, Edward, Troy MI 48084 (US); Denlinger, Adam, Saline MI 48176 (US); Dhillon, Jaswant, Canton MI 48187 (US)
(74) Representative: Messulam, Alec Moses

(56) References cited:
- US-A- 4 332 219
- US-A- 4 688 425
- US-A- 5 359 968
- PATENT ABSTRACTS OF JAPAN vol. 008, no. 245 (P-312), 10 November 1984 (1984-11-10) & JP 59 119229 A (HONDA GIKEN KOGYO KK), 10 July 1984 (1984-07-10)

## Description

### Field of the Invention

The present invention relates generally to hybrid electric vehicles, and more particularly to a hybrid electric powertrain and vehicle powered by a hydrogen-fuelled internal combustion engine.

### Background Art

Automotive manufacturers in recent years have intensified research and development efforts to implement and commercialise more quickly vehicular fuel cell and gasoline hybrid electric vehicle (HEV) technologies. Fuel cell technologies utilize electro-chemical conversion devices, such as PEM and solid oxide fuel cells, to generate drive power with zero tailpipe emissions. Gasoline hybrids, while not completely eliminating tailpipe emissions, can significantly improve fuel economy at a fraction of the cost of present-day fuel cell technologies.

Alternatively, powertrains combining the benefits of hydrogen-powered internal combustion engines and hybrid electric functionality have been proposed. In U.S. Patent Application Publication 2002/0098414, for example, a very low emission hybrid electric vehicle is disclosed having a hydrogen-powered internal combustion engine, a metal hydride hydrogen storage unit, an electric motor and a nickel metal hydride battery. The problem however, due to the low power density of hydrogen gas when used in an internal combustion engine, is the ability of the powertrain to deliver gasoline engine-like performance over a wide range of operating speeds. This is so because hydrogen internal combustion engines are usually operated with a fuel-lean air/fuel ratio in order to preserve combustion stability.

As such, the inventors herein have recognized the need to adapt conventional internal combustion engine and HEV technologies to utilize hydrogen fuel and thus achieve substantial reductions in tailpipe emissions while maintaining hybrid functionality and performance comparable to conventional gasoline-powered engines.

The present application is a divisional application of EP 1,578,632 which is directed to a powertrain, comprising a primary power generating system for generating a primary drive torque, the primary power system having a hydrogen-fuelled internal combustion engine operating with a lean hydrogen gas fuel mixture, the internal combustion engine having at least one air charge boosting device for increasing the primary drive torque at a range of operating speeds of the powertrain; and a secondary power generating system having at least one electric torque generating device for generating a secondary drive torque, the secondary power generating system being constructed and arranged such that the secondary drive torque complements the boosted primary drive torque over at least a low operating speed range of the powertrain.

US 5,359,968 teaches shutting off a hydrogen fuel supply to an engine when a backfire is sensed.

### Summary of the invention

In accordance with the present invention, there is provided a method for sensing and responding to a backfire arising in the intake system of a hydrogen fuelled reciprocating internal combustion engine, comprising the steps of:
sensing a backfire by sensing the temperature within the intake system;
shutting off the hydrogen fuel to the engine when a backfire is sensed; and
increasing the output torque of an electric drive system associated with the engine in the event the hydrogen fuel is shut off.

Preferably a backfire is sensed by sensing the pressure within the engine's intake system.

Advantageously, fuelling of the engine with hydrogen is resumed once a backfire event has ceased.

### Brief description of the drawings

The invention will now be described further, by way of example, with reference to the accompanying drawings, in which:
FIG. 1 is a schematic block diagram showing a generic representation of a hybrid powertrain system;
FIGS. 2a through 2c are schematic block diagrams illustrating examples of various power transmission units applicable to the generic hybrid powertrain system representation of FIG. 1;
FIG. 3 is block schematic diagram of an exemplary hybrid powertrain according to the present invention;
FIG. 4 is a schematic diagram showing an embodiment of hydrogen-fuel internal combustion for use in the hybrid powertrain of FIG. 3; and
FIG. 5 is a flow chart of a method according to the present invention for sensing an intake manifold backfire in a hydrogen-fuelled internal combustion engine.

### Detailed Description Of The Preferred Embodiments

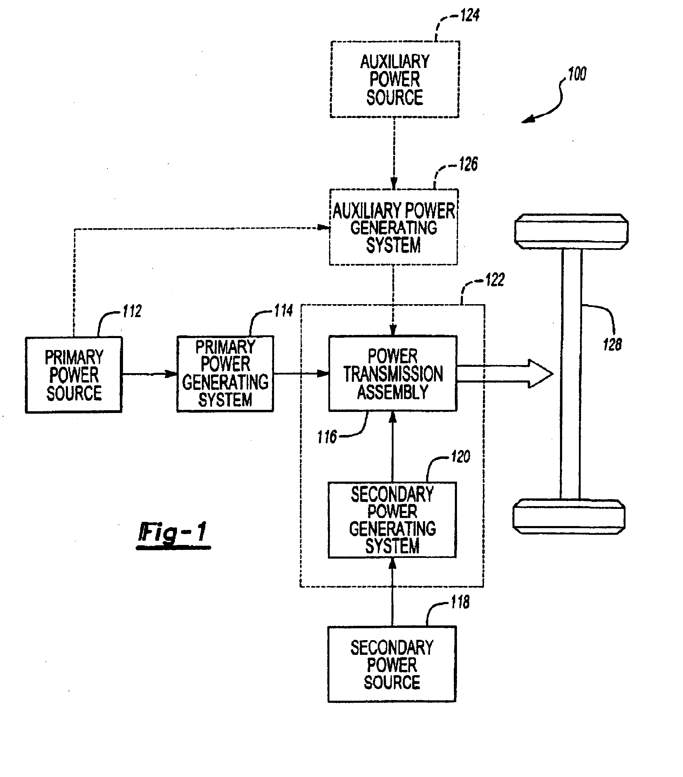

FIG. 1 shows a generic architecture for a hybrid vehicle system 100. 'The system 100 includes a primary power source 112, such as a gasoline, diesel or other gas fuel supply, coupled to a primary power generating system 114, such as an internal combustion engine. The primary power generating system 114 generates a primary drive torque that is transmitted to the vehicle's driveline 128 via power transmission assembly 116.

The power transmission assembly 116 can be a conventional manual, automatic or continuously variable automotive transmission, or other equivalent gearing mechanism for transmitting mechanical power produced the primary power generating system 114. The system 110 further includes a secondary power source 118, such as a battery, ultra capacitor, hydraulic accumulator or other energy storage device, and secondary power generating system 120, such as one or more electric machines or other torque generating devices, for supplementing the drive torque delivered by the primary power generating system 114. The system may further include an auxiliary power source 124 coupled to an auxiliary power generating system 126, such as a fuel cell system or Auxiliary Power Unit (APU), for providing additional drive torque.

The primary power generating system 114 in the present invention is a hydrogen-burning internal combustion engine. The hydrogen power source 112 can include compressed hydrogen gas storage system, or a low-pressure system such as a metal hydride storage system. Power transmission assembly 116 transmits the output of both the internal combustion engine 114 and the secondary power generating system 120 to the vehicle driveline 128. The power transmission assembly 116 is preferably a converter-less automatic transmission constructed and arranged with the secondary power generating system 120, preferably an integrated high voltage electric motor/generator. Advantageously, the power transmission assembly 116 and secondary power generating system 120 can be packaged into a single modular hybrid transmission unit 122.

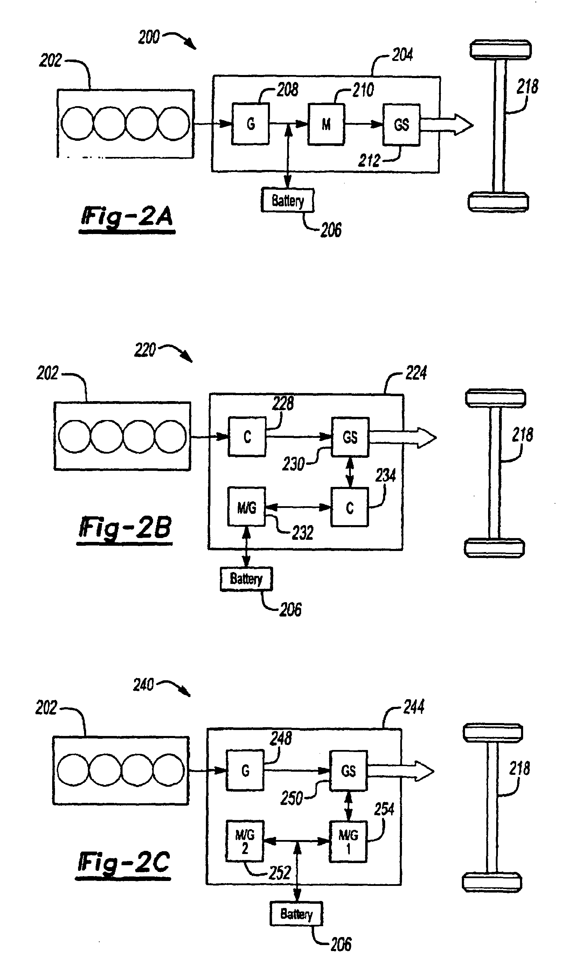

FIGS. 2a through 2c show exemplary hybrid powertrain system configurations to which the present invention is applicable. FIG. 2a shows a so-called "series" hybrid configuration 200 having a hydrogen-fuelled internal combustion engine 202 coupled to a modular hybrid transmission unit 204. Modular hybrid transmission unit 204 includes an electric generator 208 that produces electrical energy for powering the vehicle drive wheels 218 via an electric motor 210 and gearset 212. Electrical storage device 206 stores electrical energy via the generator 208 when the internal combustion engine produces more power than required, and supplements the engine power via the electric motor 210 when power demand is exceeds than the engine power output. FIG. 2b shows a so-called "parallel" hybrid configuration 220, wherein a modular hybrid transmission unit 224 delivers driveline torque via a first power path having the hydrogen-fuelled internal combustion engine 202, a coupling device 228, and a gearset 230, and a second power path having a motor/generator 232, a coupling device 234 and the gearset 230. The coupling devices 228 and 234 can be any suitable devices, for example a gearset or clutch, for transmitting mechanical energy to the vehicle driveline 218. In one embodiment, the coupling devices 228 and 234 can be the same device. FIG. 2c shows a so-called "parallel-series" configuration 30 wherein a modular hybrid transmission unit 244 includes motor/generators 252 and 253 electrically and/or mechanically coupled, for example via a planetary gearset, to deliver power to a gearset 250 and driveline 218.

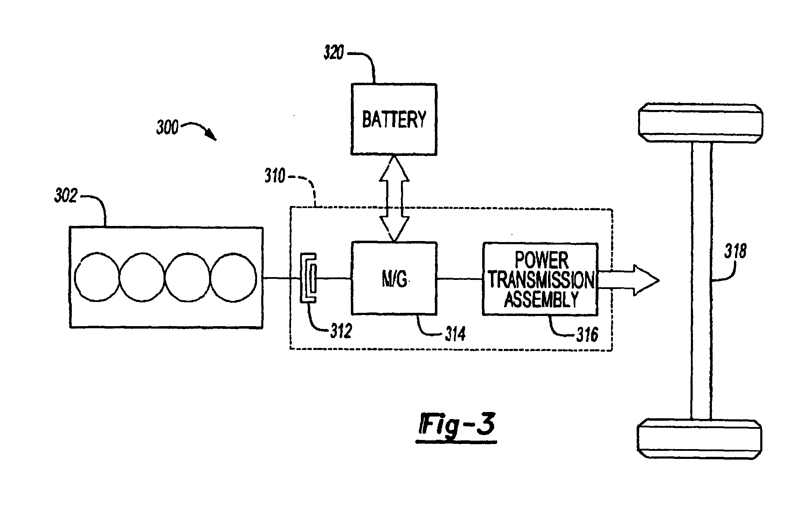

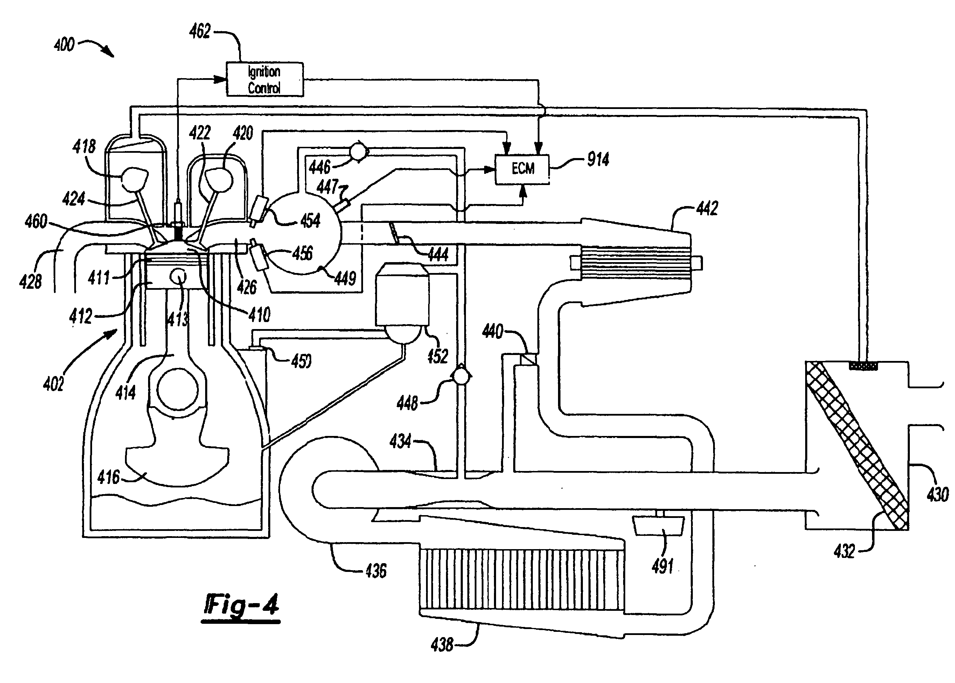

FIG. 3 shows a block schematic diagram of a hybrid powertrain system 300. The system 300 includes a hydrogen-fuelled internal combustion engine 302, an example of which is described below with reference to FIG. 4, and a modular hybrid transmission system 310. The modular hybrid transmission system 310 includes a clutch mechanism 312 that can be selectively engaged and disengaged to operate the powertrain 300 as a parallel hybrid system. When the a clutch mechanism 312 is engaged, the torque output of engine 302 is transmitted to supplement the torque output of a motor/generator 314, which is coupled to a battery 320. When operated as motor, the motor/generator 314 uses electric energy stored in battery 320, and when operated as a generator, the motor/generator 314 provides electrical charge to the battery 320.

FIG. 4 shows a schematic diagram of hydrogen-fuelled internal combustion engine 400 for use as part of the hybrid powertrain system of FIG. 3. The engine is a hydrogen gas burning, four-stroke, port fuel injected internal combustion engine having a plurality of cylinders 402 (only one shown), with each of the cylinders having a combustion chamber 410 and a corresponding reciprocating piston 412 cooperating with a connecting rod 414 and a crankshaft 416. In accordance with one embodiment, the piston 412 is optimised for a compression ratio of approximately 12.2:1 and is constructed from forged aluminium piston. Piston 412 also features a substantially flat piston head and a ring pack 411 optimised for 120 bar peak cylinder pressure. A fully floating, bush-type piston pin 413 attaches the piston 412 to connecting rod 414, which is machined from 4340 steel and shortened, compared to a similar gasoline engine connecting rod, to accommodate the ring pack 411.

A plurality of camshaft assemblies 418 and 420 are mechanically coupled with intake and exhaust valves 422 and 424, respectively, which are operated to communicate with respective intake and exhaust manifolds. Preferably, the valves 422 and 424 included a Stellite(r) facing and hardened valve seats to improve wear resistance due to reduced lubricity of the hydrogen fuel

A dual rail fuel injector system, shown collectively by reference numerals 454 and 456, includes high fuel flow rate injectors 454 (only one shown) and low fuel flow injectors 456 (again only one shown). The injectors 454 and 456, preferably disc-type gaseous fuel injectors, are controlled by an engine control module (ECM) 914 (see FIG. 9), which regulates the supply of hydrogen fuel from a compressed gas, metal hydride or other hydrogen storage medium. Because hydrogen has a very wide combustion range, ECM 914 nominally operates the fuel injectors 454 and 456 to provide a lean air/fuel mixture in each of the combustion chambers 410. By way of example and not limitation, the engine 400 can be operated with an air/fuel ratio of approximately 86:1 during highway cruising, compared to approximately 14.7:1 with a similar conventional gasoline-powered engine.

Operation of the engine 400 in a lean regime allows improved fuel efficiency without pre-ignition or so-called engine "knock." Low flow rate injectors 456 are operated at low engine speed, and high flow rate injectors 454 are operated at high engine speeds. Fuel is injected into each of the combustion chambers 410 only when the intake valve 422 is open and the exhaust valve 424 is closed. This "late fuel injection timing" allows for induction air cooling of the exhaust valve 424 during overlap period, so as to minimize occurrence of backflash/backfire. Advantageously, the "end of injection timing" is fixed at 180° (BDC of intake stroke) with a period of 20° to 170° such that fuel is never injected before the exhaust valves are closed.

Fuel injectors 454 and 456 have partially overlapping flow rates. In other words, the minimum practicable flow rate for high flow rate injectors 454 is equivalent to the maximum flow rate of low flow injectors 456. This allows wide-scale changes in fuel delivery rate to be accommodated without undesirable discontinuities. This is accomplished by using electronically controlled injectors which are opened for variable periods of time, with such periods being termed pulse width. This method is shown in FIG. 12. Accordingly, when hydrogen flow is being increased, as when the answer to the question posed at block 1214 is "yes", the pulse width of low flow injectors 456 will be increased by controller 914 to an overlap flow rate value at block 1126, at which time high flow injectors 454 will be operated with a pulse width corresponding to the overlap value at block 1218. Simultaneously at block 1218, the pulse width of low flow injectors 456 will be reduced such that the total flow from both sets of injectors is the same as the previous overlap flow rate from low flow injectors 456. Thereafter, the flow rate of high flow injectors 454 may be further increased by controller 914, and the flow rate of low flow rate injectors may be further decreased, until low flow rate injectors 456 are shut off. In cases where fuel delivery is being decreased from a high fuelling rate, the pulse width of the high fuel rate injectors 454 will be decreased at block 1222 to the overlap value, and at block 1224 low rate injectors 456 will be operated at the overlap value, while high rate injectors 456 are simultaneously turned off.

The ability to rapidly control the hydrogen fuel flow is important for at least one additional reason with the present powertrain system. Because backfiring in the intake manifold of a port-injected hydrogen fuelled reciprocating internal combustion engine may be a problem in certain operating regimes, engine 400 has a temperature and absolute pressure (TMAP) sensor 447 mounted in intake plenum 449 (FIG. 4).

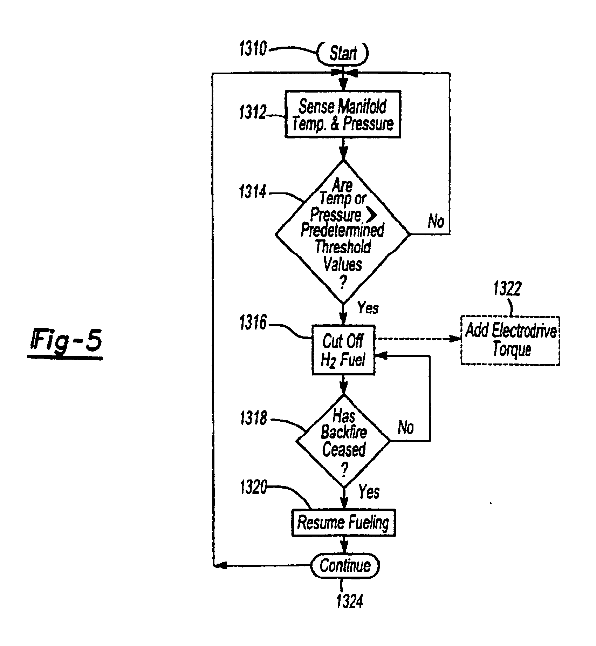

TMAP sensor is employed in the present invention to control backfire, as illustrated by means of a flow chart in FIG. 5. Backfiring typically causes an almost instantaneous increase in intake manifold temperature and sometimes, pressure. At block 1312, TMAP sensor 447 continuously senses these intake plenum temperature and pressure. Then, at block 1314, engine controller 914 compares the measured values for temperature, and if desired, pressure, to predetermined threshold values. If the answer to the question at block 1314 is "no, the routine merely continues. If the answer is "yes", the routine proceeds to block 1316, wherein controller 914 cuts of the fuel by setting the injector pulse widths to zero. Then at block 1318, controller 914 checks to see whether the sensors and elapsed time indicate that the backfire has ceased. If so, fuelling will be resumed at block 1320.

During the period of non-fuelling, the electrodrive system may be used at block 1322 to compensate for the torque deficit which would otherwise occur. Of course, electrodrive assist will be available only if various conditions are met, such as adequate battery state of charge, suitable road speed, and other conditions.

Spark plugs 460 (only one shown) are electrically coupled to an ignition system 462, preferably a so-called "coil-on-plug" ignition system, which is also controlled by the ECM 914.

Engine 400 further includes at least one air charge boosting device 436, such as a centrifugal-type supercharger, for increasing the power output of the engine. In the illustrated engine, a centrifugal supercharger is belt driven from the engine's front end accessory drive (FEAD) and nominally provides 90 kpa (gage) boost at an engine speed of 5000 rpm. Supercharging, however, has the undesired effect of heating the intake air and thus making the engine more susceptible to pre-ignition. This ultimately limits the power output of the engine. Therefore, to minimize air heating, a dual-stage intercooling system is provided as described in US 2003/0098011, which is owned by the present assignee. The dual-stage intercooling system includes an air-to-air intercooler 438 in communication with the supercharger 436, and an air conditioning-to-air intercooler 442 disposed downstream of the air-to-air intercooler 438 for further reduction of air temperature. Nominally, the air conditioning-to-air intercooler 442 is operated under high boost conditions using R-134 as the cooling medium.

Oil consumption control measures are provided to prevent auto-ignition and to substantially reduce carbon-based and nitrous oxide emissions. Accordingly, cylinder 402 is machined, using deck plate cylinder bore honing, to optimise the geometry of the cylinder walls. The end gaps of the piston rings in ring pack 411 are optimised for increased pressure and reliability, as are the valve stem seals to minimize oil pull-by and to improve wear resistance.

A positive crankcase ventilation (PCV) system incorporating separator 452 and check valves 446 and 448, as well as venturi 434, is also included to remove oil vapour from crankcase gases. Such a system is described for example in U.S Patent No. 6,606, 982, which is owned by the present assignee. The PCV system is an emission control system designed to extract combusted and partially combusted gases from the crankcase and re-burn them, and in particular can be used with a pressurized/vacuum induction system to provide improved oil/air separation.

As a result of the lean air/hydrogen fuel mixture, supercharging and intercooling, engine 400 of FIG. 4 is optimised for maximum efficiency, power and range. In addition, the oil control measures described above serve to substantially minimize hydrocarbon, NOx, and CO₂ emissions of engine 400.

## Claims

1. A method for sensing and responding to a backfire arising in the intake system of a hydrogen fuelled reciprocating internal combustion engine, comprising the steps of:
sensing a backfire by sensing the temperature within the intake system;
shutting off the hydrogen fuel to the engine when a backfire is sensed; and
increasing the output torque of an electric drive system associated with the engine in the event the hydrogen fuel is shut off.

2. A method as claimed in claim 1, further comprising the step of sensing a backfire by sensing the pressure within the engine's intake system.

3. A method as claimed in claim 1 or 2 , further comprising the step of resuming fuelling of the engine with hydrogen once a backfire event has ceased.

## Patentansprüche

1. Verfahren zur Feststellung von und Reaktion auf Rückzündung im Ansaugsystem eines wasserstoffangetriebenen Verbrennungsmotors, das folgende Schritte umfasst:
Feststellen einer Rückzündung durch Feststellen der Temperatur im Ansaugsystem,
Abschalten des Wasserstoffbrennstoffs zum Motor, wenn eine Rückzündung festgestellt wird, und
Erhöhen des Abtriebsmoments eines zum Motor gehörigen elektrischen Antriebssystems, falls der Wasserstoffbrennstoff abgeschaltet wird.

2. Verfahren gemäß Anspruch 1, das ferner den Schritt des Feststellens einer Rückzündung durch Feststellen des Drucks im Ansaugsystem des Motors umfasst.

3. Verfahren gemäß Anspruch 1 oder 2, das ferner den Schritt der Wiederaufnahme der Versorgung des Motors mit Wasserstoff umfasst, wenn eine Rückzündung aufgehört hat.

## Revendications

1. Procédé pour déterminer et répondre à un retour de flamme ayant lieu dans le système d'admission d'un moteur à mouvement alternatif à combustion interne alimenté à l'hydrogène, comportant les étapes consistant à :
déterminer un retour de flamme en déterminant la température à l'intérieur du système d'admission ;
couper le combustible à base d'hydrogène au niveau du moteur quand un retour de flamme est déterminé ; et
augmenter le couple de sortie d'un système d'entraînement électrique associé au moteur en cas de coupure du combustible à base d'hydrogène.

2. Procédé selon la revendication 1, comportant par ailleurs l'étape consistant à déterminer un retour de flamme en déterminant la pression à l'intérieur du système d'admission du moteur.

3. Procédé selon la revendication 1 ou la revendication 2, comportant par ailleurs l'étape consistant à reprendre l'alimentation du moteur en combustible à base d'hydrogène une fois l'événement de retour de flamme terminé.
